# EUROPEAN PATENT APPLICATION

(11) **EP 4 411 976 A1**
(43) Date of publication of application: **07.08.2024**
(21) Application number: 22876002.1
(22) Date of filing: 21.09.2022
(51) Int. Cl.: H01M 50/578, H01G 2/14, H01G 2/18, H01G 11/14, H01G 11/78, H01G 11/84, H01M 50/152, H01M 50/184, H01M 50/342, H01M 50/531, H01M 50/548, H01M 50/559

(54) **POWER STORAGE DEVICE AND METHOD FOR MANUFACTURING POWER STORAGE DEVICE**

(30) Priority: 29.09.2021 JP 2021159963
(71) Applicant: Panasonic Intellectual Property Management Co., Ltd., Kadoma-shi, Osaka 571-0057 (JP)
(72) Inventor: NAGAO Takeshi, Kadoma-shi, Osaka 571-0057 (JP); SHIMIZU Kazumichi, Kadoma-shi, Osaka 571-0057 (JP)
(74) Representative: Novagraaf International SA
(86) International application number: PCT/JP2022/035254
(87) International publication number: WO 2023/054135

(57) **Abstract**

A power storage device includes a case, a power storage element, a lead, and a sealing member. The sealing member includes an insulating gasket that includes a base; and a conductive sealing plate. The sealing plate includes a displaceable part that includes a protrusion projecting toward the power storage element. The base is disposed between the sealing plate and the power storage element. The power storage device further includes a reinforcing member reinforcing the base. The base includes a first through hole, and the reinforcing member includes a second through hole. The protrusion is inserted in the first and second through holes. The protrusion is connected to the lead. The protrusion is disconnected from the lead when displaced in a direction away from the lead in response to an increase in internal pressure of the case.

## Description

### TECHNICAL FIELD

The present disclosure relates to a power storage device and a method for manufacturing a power storage device.

### BACKGROUND ART

Power storage devices equipped with so-called current interrupt devices (CIDs) have been known (as in, for example, PTL 1). A power storage device described in PTL 1 includes a bottomed tubular case, a power storage element disposed inside the case, a lead connected to an electrode of the power storage element, and a sealing member sealing an opening of the case. The sealing member includes an insulating gasket that includes a base, and a conductive sealing plate that includes a protrusion, with the base between the sealing plate and the power storage element. The protrusion of the sealing plate is inserted in a through hole in the base and is connected to the lead. When the protrusion is displaced in a direction away from the lead, according with increasing internal pressure of the case, a current interrupt device works to disconnect the protrusion from the lead.

### CITATION LIST

### Patent Literature

PTL 1: Japanese Patent Application Laid-open No. 2021-125304

### SUMMARY OF THE INVENTION

In order for the current interrupt device described in PTL 1 to have enhanced operational reliability, the lead is required to be difficult to displace when the protrusion is displaced. However, the lead is also displaced along with the protrusion when the base of the gasket undergoes a certain degree of deformation and thus may impair the operational reliability of the current interrupt device. One object of the present disclosure is to enhance operational reliability of a current interrupt device in such a situation.

One aspect of the present disclosure relates to a power storage device. The power storage device includes a case including a tubular part that is cylindrical and includes an open end part at one end and a bottom part closing an opposite end of the tubular part; a power storage element that is disposed inside the case and includes a pair of electrodes; a lead connected to one of the pair of electrodes; and a sealing member sealing the open end part of the case. The sealing member includes a gasket having an insulation property and a sealing plate having conductivity. The gasket includes a compression part between the tubular part and the sealing plate and a base that is disk-shaped and is layered with the sealing plate. The sealing plate includes a displaceable part that includes a protrusion projecting toward the power storage element and an outer peripheral part that surrounds the displaceable part and is pinched by the compression part. The base is disposed between the sealing plate and the power storage element. The power storage device further includes a reinforcing member that is provided between the base and the lead and reinforces the base. The base includes a first through hole, and the reinforcing member includes a second through hole at a position overlapping with the first through hole. The protrusion of the sealing plate is inserted in the first through hole and the second through hole. The protrusion of the sealing plate is connected to the lead. The protrusion is disconnected from the lead when displaced in a direction away from the lead in response to an increase in internal pressure of the case.

The present disclosure enables a current interrupt device to have enhanced operational reliability.

### BRIEF DESCRIPTION OF THE DRAWINGS

FIG. 1 is a sectional view schematically illustrating a configuration of a power storage device according to a first exemplary embodiment.
FIG. 2 is an enlarged sectional view of an essential part of the power storage device according to the first exemplary embodiment.
FIG. 3 is a perspective view of a sealing member according to the first exemplary embodiment, as seen from a bottom part of a case.
FIG. 4 is a perspective view of a sealing member according to a first modification of the first exemplary embodiment, as seen from a bottom part of a case.
FIG. 5 is a perspective view of a sealing member according to a second modification of the first exemplary embodiment, as seen from a bottom part of a case.
FIG. 6 is an enlarged sectional view of an essential part of a power storage device according to a third modification of the first exemplary embodiment.
FIG. 7 is an enlarged sectional view of an essential part of a power storage device according to a second exemplary embodiment.

### DESCRIPTION OF EMBODIMENTS

Exemplary embodiments of a power storage device and a method for manufacturing a power storage device according to the present disclosure are hereinafter described by way of examples. However, the present disclosure is not limited to the examples described below. While specific numerical values and materials may be given as examples in the following description, other numerical values and materials may be used as long as effects of the present disclosure can be acquired.

### Power Storage Device

A power storage device according to the present disclosure may be a secondary battery or a capacitor. The power storage device may be a non-aqueous electrolyte secondary battery (such as a lithium ion secondary battery or a lithium secondary battery), a nickel-hydrogen secondary battery, or another battery. The power storage device may be an electric double-layer capacitor, a lithium-ion capacitor, or another capacitor. The power storage device includes a case, a power storage element, a lead, a sealing member, and a reinforcing member.

The case includes a tubular part that is cylindrical and includes an open end part at one end and a bottom part closing an opposite end of the tubular part. For example, the case may function as one of electrode terminals. In cases where the case functions as the electrode terminal, the case may be made of, for example, conductive metal and electrically connected to one of electrodes (the electrode not electrically connected to a sealing plate that is described later) of the power storage element. For example, the case may be electrically connected to the negative electrode.

The case to be used can be, for example, a metal case. The metal case may be made of aluminum, iron, nickel, copper, an alloy of these metals, a clad material, or another material. The case to be used in the power storage device is not limited to the above configuration and may be a publicly known case.

The power storage element is disposed inside the case and includes the pair of electrodes. The power storage element is not particularly limited and may be selected in accordance with a type of power storage device. The power storage element to be used can be a publicly known power storage element. In cases where, for example, the power storage device is a secondary battery, the power storage element to be used may include a positive electrode, a negative electrode, a separator, and an electrolyte. A negative electrode of the lithium ion secondary battery given as the example includes, as a negative-electrode active material, a substance that reversibly occludes and releases lithium ions. Examples of the negative-electrode active material include a carbon material such as graphite, and inorganic compounds such as silicon and titanium oxide. A positive electrode of the lithium ion secondary battery may include a lithium-containing transition metal composite oxide or the like as a positive-electrode active material. Examples of an element included in this transition metal composite oxide include nickel, manganese, cobalt, and aluminum, among others.

In cases where the power storage device is a capacitor, the power storage element to be used may include two electrodes, an electrolyte, and a separator. These constituent elements can be selected in accordance with a type of capacitor.

The lead is connected to one of the pair of electrodes of the power storage element. The lead to be used may be a lead used in a publicly known power storage device. For the lead, a strip of metal foil may be used. Examples of the metal (conductive metal) for the lead include aluminum, iron, nickel, copper, an alloy of these metals, and a clad material, among others. The lead may be connected to either of the pair of electrodes of the power storage element at one end; however, when the power storage device is the secondary battery, the lead is connected, for example, to the positive electrode.

The sealing member seals the open end part of the case. The sealing member includes a gasket having an insulation property and a sealing plate having conductivity.

The gasket includes a compression part between the tubular part of the case and the sealing plate and a base that is disk-shaped and is layered with the sealing plate. The base is disposed between the sealing plate and the power storage element. The base includes a first through hole. The first through hole may be in a central region of the base. The first through hole is not limited to a particular shape, and examples of its shape may include a circle, an ellipse, an oblong, a rectangle, and a polygon, among others.

The gasket is made of an elastic and insulating material that functions as a gasket. The gasket may be made of a publicly known material that is used for gaskets of secondary batteries or capacitors. Examples of the material for the gasket include polypropylene (PP), polyphenylene sulfide (PPS), polybutylene terephthalate (PBT), perfluoroalkoxy alane (PFA), and polyetheretherketone (PEEK), among others. Additives (such as publicly known additives) may be added to these materials as required. The gasket is formed by a non-limiting method and may be formed, for example, by injection molding or another method.

The sealing plate includes a displaceable part that includes a protrusion projecting toward the power storage element, an outer peripheral part that surrounds the displaceable part and is pinched by the compression part of the gasket, and a thin-walled part connecting the displaceable part and the outer peripheral part. The sealing plate is, for example, disk-shaped as a whole. The displaceable part may be circular or polygonal when viewed in an axial direction of the case. The outer peripheral part surrounding the displaceable part may be, for example, ring-shaped when viewed in the axial direction of the case, and the thin-walled part may also be ring-shaped. The protrusion may be, for example, at a center of the displaceable part. When viewed in the axial direction, the protrusion may have the shape of a circle, an oblong, an ellipse, a rectangle, or a polygon. The sealing plate may function as an electrode terminal or as a displaceable member electrically connecting an electrode terminal (such as a terminal cap) and the lead. The sealing plate is, for example, a metal plate and is made of, for example, aluminum, nickel, copper, iron, another metal, an alloy of these metals, or a clad material. The thin-walled part is not necessarily required.

The reinforcing member is provided between the base of the gasket and the lead and reinforces the base. The reinforcing member may be made of a material that has high rigidity compared with the material for the gasket. While the material for the reinforcing member may be more rigid than that for the lead, the reinforcing member may be designed thicker than the lead when using the same material as the lead. The reinforcing member may be a conductive member and may be made of, for example, metal (examples of which include aluminum, iron, nickel, copper, and stainless steel, among others). The reinforcing member may be made of an insulating resin with higher rigidity than that for the gasket. In cases where the insulating resin is used for the reinforcing member, the reinforcing member does not have to be mechanically connected to the lead. However, the reinforcing member may be mechanically connected to the lead via an adhesive or another means. The reinforcing member may be integral with or separate from the base of the gasket. In the former case, the reinforcing member may be, for example, insert-molded together with the gasket. In the latter case, the reinforcing member may mechanically engage with the base, may be press-fitted into a hole in the base, or may be fixed to the base via an adhesive, or with the reinforcing member including a through hole and with the base including a projection, the projection may be inserted into the through hole, followed by welding using a hot melt.

The reinforcing member includes a second through hole at a position overlapping with the first through hole. The phrase "position overlapping with the first through hole" here means that when viewed along the axis of the case, the second through hole and the first through hole at least partly overlap. The second through hole is not limited to a particular shape, and examples of its shape may include a circle, an ellipse, an oblong, a rectangle, and a polygon, among others. The shape of the second through hole may be the same as or different from the shape of the first through hole.

The protrusion of the sealing plate is inserted in the first through hole and the second through hole. The lead is connected to the protrusion at an opposite end or near the opposite end. In other words, the lead is electrically and physically connected to the sealing plate. A method of connecting the lead and the sealing plate is not particularly limited, and welding, for example, is among methods that may be used. However, the connection method needs to be such that the lead and the sealing plate are disconnected to function as a current interrupt device when force that separates the lead and the sealing plate increases. In cases where the lead and the sealing plate are welded together, the force required to separate the lead and the sealing plate can be adjusted by changing conditions such as a welding area and a welding depth. The welding method is not particularly limited, and laser welding, resistance welding, friction stirring, ultrasonic bonding are among its examples that may be used.

From the viewpoint of reducing a parts count, the lead is preferably connected directly to the sealing plate. However, the lead and the sealing plate may be connected indirectly via a conductive member as long as the lead and the sealing plate are enabled to function as the current interrupt device.

In the power storage device according to the present disclosure, the current interrupt device works to disconnect the protrusion from the lead when the protrusion is displaced in a direction away from the lead in response to an increase in internal pressure of the case. The displacement may occur when the internal pressure of the case exceeds a predetermined value. When such displacement occurs, the base of the gasket is hardly deformed because of being reinforced by the reinforcing member. Therefore, even when pulled by the protrusion being displaced, the lead is in contact with the base of the gasket, resulting in reduced displacement. The protrusion is separated from the lead that is hardly displaced, thus resulting in proper operation of the current interrupt device.

The reinforcing member may be the conductive member. The reinforcing member and the lead may be electrically and mechanically connected. According to this configuration, the lead is connected to the reinforcing member, which makes it more difficult for the lead to follow the protrusion being displaced even when pulled. Therefore, the current interrupt device is enabled to have further enhanced operational reliability.

The protrusion and the lead are connected by a first connection part, the reinforcing member and the lead are connected by a second connection part, and the first connection part and the second connection part may be continuous with each other. Alternatively, the first connection part connecting the protrusion and the lead and the second connection part connecting the reinforcing member and the lead may be separate from each other.

The sealing plate may include the thin-walled part between the protrusion part and the outer peripheral part. In cases where the thin-walled part is present between the outer peripheral part and the protrusion, an outer edge of the reinforcing member may be located externally to an inner edge of the outer peripheral part of the sealing plate or an inner peripheral wall of the ring-shaped outer peripheral part in a radial direction of the case. According to this configuration, the reinforcing member overlaps, at the outer edge and an area near the outer edge, with the outer peripheral part of the sealing plate in the direction of displacement. The outer peripheral part is thicker and sturdier than the thin-walled part and is firmly held by the open end part of the case. Therefore, when the lead is pulled by the protrusion being displaced, displacement of the reinforcing member being pushed in the direction of displacement by the lead is restricted, at the outer edge and the area near the outer edge, by the outer peripheral part of the sealing plate. The displacement of the lead is further reduced, so the operational reliability of the current interrupt device is even further enhanced.

The base of the gasket may include a recess in a face facing the power storage element. The reinforcing member may be at least partly housed in the recess. This configuration enables the reinforcing member to be more reliably held by the base.

The base of the gasket and the reinforcing member may respectively include through holes that overlap each other. These through holes may lead to the displaceable part for transmitting the internal pressure of the case to the displaceable part.

### Method for Manufacturing Power Storage Device

A method for manufacturing a power storage device according to the present disclosure is a method for manufacturing the above-described power storage device in which the first connection part connecting the protrusion and the lead and the second connection part connecting the reinforcing member and the lead are continuous with each other or separate from each other. The manufacturing method includes a welding step.

In the welding step, the first connection part and the second connection part are formed, for example, by laser welding. In the welding step, laser output power for an area between the first connection part and the second connection part (also called "boundary area" below) is made weaker than for the first connection part and for the second connection part, or the boundary area is excluded from laser irradiation. The boundary area is an area where there is a boundary between the protrusion and the reinforcing member. Therefore, the boundary area is where spattering is more likely to occur during laser welding compared with areas corresponding respectively to the first connection part and the second connection part. Spattering can affect quality of the power storage device and is thus preferably restrained from occurring. Therefore, in the welding step according to the present disclosure, the laser output power for the boundary area is made weaker as described above, or the boundary area does not undergo the laser irradiation. In this way, spattering can be restrained from occurring during laser welding, and the power storage device can be of higher quality. A joining method other than laser welding (such as friction stir welding or resistance welding) may be used to join the lead and the reinforcing member.

As described above, the present disclosure allows for the enhanced operational reliability of the current interrupt device by restraining the deformation of the base of the gasket. Furthermore, the present disclosure enables the power storage device to be of higher quality by restraining the spattering from occurring during the laser welding.

With reference to the drawings, a description is hereinafter provided of concrete examples of the power storage device and the method for manufacturing the power storage device according to the present disclosure. The above constituent elements can be applied to constituent elements of the example power storage devices to be described below, and the above step can be applied to steps of the example power storage device manufacturing methods to be described below. The constituent elements of the example power storage devices to be described below and the steps of the example power storage device manufacturing methods to be described below can be changed on the basis of the above description. Matters to be described below may be applied to the above-described aspect. Among the constituent elements and the steps of the example power storage devices and the example power storage device manufacturing methods that are to be described below, constituent elements and steps that are not essential to the power storage device and the method for manufacturing the power storage device according to the present disclosure may be omitted. The drawings indicated below are schematic, not accurately reflecting actual component shapes and an actual parts count.

### FIRST EXEMPLARY EMBODIMENT

A description is provided of a first exemplary embodiment according to the present disclosure. Power storage device 10 according to the present exemplary embodiment is a lithium ion secondary battery but is not limited to this. For example, power storage device 10 may be a lithium-ion capacitor, an electric double-layer capacitor, a power storage device intermediate between a lithium ion secondary battery and a lithium-ion capacitor, or another electrochemical device.

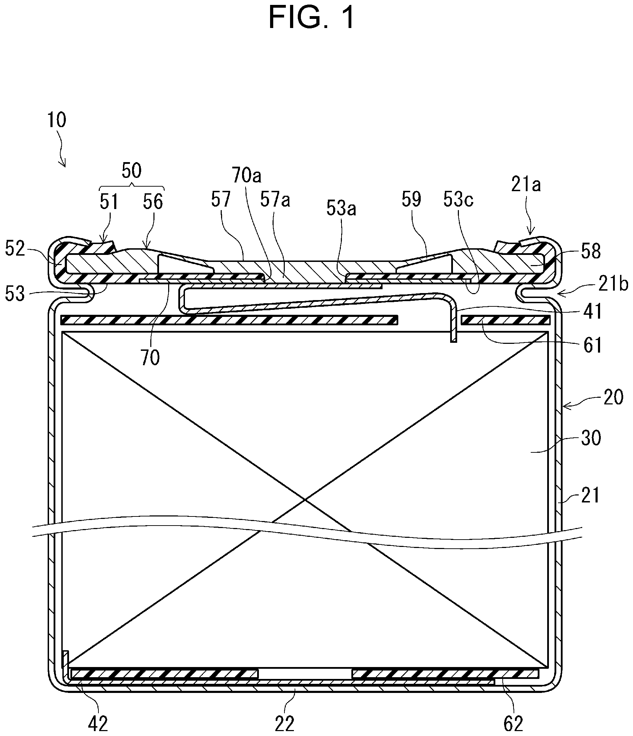

As illustrated in FIGS. 1 to 3, power storage device 10 includes bottomed tubular case 20; power storage element 30 that is disposed inside case 20 and includes a pair of electrodes (not illustrated); first lead 41 connected to one of the pair of electrodes; second lead 42 connected to a different one of the electrodes; sealing member 50 sealing open end part 21a of case 20; and reinforcing member 70. Power storage device 10 further includes first insulating plate 61 and second insulating plate 62. First and second insulating plates 61 and 62 are disk-shaped members that each include a through hole.

Case 20 includes tubular part 21 including open end part 21a at one end (an upper end in FIG. 1) and bottom part 22 closing an opposite end of tubular part 21. Tubular part 21 includes annular grooved part 21b projecting inward in a radial direction of tubular part 21 near open end part 21a. Sealing member 50 is disposed on an inner peripheral surface of grooved part 21b. Open end part 21a of case 20 is crimped to outer peripheral part 58 of sealing plate 56 (described later) via gasket 51 (described later). As a result, sealing member 50 is held between grooved part 21b and open end part 21a, sealing case 20.

Power storage element 30 is substantially cylindrical. Power storage element 30 is made by winding up the positive and negative electrodes (not illustrated), with separators (not illustrated) interposed.

First lead 41 is connected to the one of the electrodes (the positive electrode in this example) of power storage element 30 at one end. First lead 41 is composed of a strip of metal foil but is not limited to this. First lead 41 is connected to protrusion 57a of sealing plate 56 at an opposite end. Therefore, sealing plate 56 functions as a positive electrode terminal of power storage device 10. First lead 41 is an example of the lead.

Second lead 42 is connected to the different one of the electrodes (the negative electrode in this example) of power storage element 30 at one end. Second lead 42 is composed of a strip of metal foil but is not limited to this. Second lead 42 is connected to bottom part 22 of case 20 at an opposite end. Therefore, case 20 functions as a negative electrode terminal of power storage device 10.

Sealing member 50 includes gasket 51 having an insulation property and sealing plate 56 having conductivity. Gasket 51 includes compression part 52 between tubular part 21 (grooved part 21b) and sealing plate 56 and disk-shaped base 53 layered with sealing plate 56. Base 53 is disposed between sealing plate 56 and power storage element 30. Base 53 has a planar shape approximately the same size as a planar shape (circular shape) of sealing plate 56. Base 53 includes, in a central region, first through hole 53a that is circular. A peripheral part of base 53 is in close contact with outer peripheral part 58 of sealing plate 56.

Sealing plate 56 includes displaceable part 57 that includes protrusion 57a projecting toward power storage element 30; outer peripheral part 58 that surrounds displaceable part 57 and is pinched by compression part 52 of gasket 51; and thin-walled part 59 connecting displaceable part 57 and outer peripheral part 58. Protrusion 57a has a crosssectional shape (a shape of a section perpendicular to an axis of case 20) that is circular but is not limited to this. Thin-walled part 59 is less thick than displaceable part 57 and outer peripheral part 58.

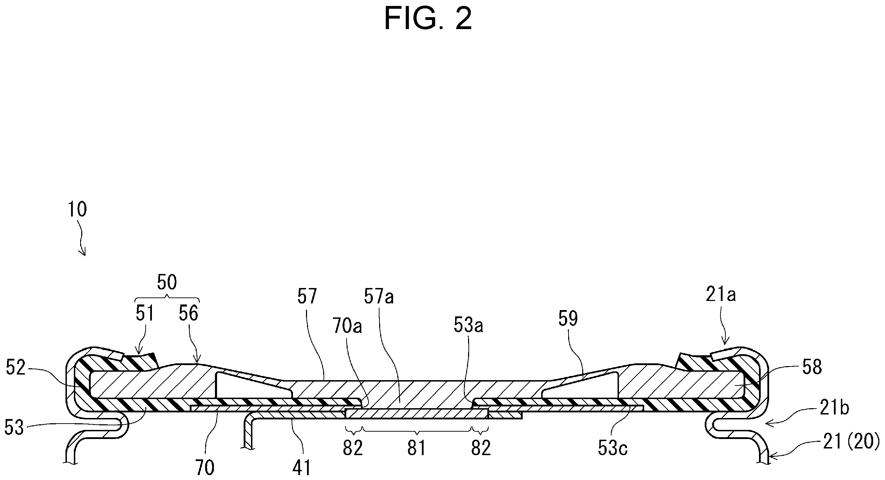

Reinforcing member 70 is provided between base 53 of gasket 51 and first lead 41 and reinforces base 53. Reinforcing member 70 is made of, for example, metal. Reinforcing member 70 includes second through hole 70a that is circular at a position overlapping with first through hole 53a. Reinforcing member 70 of the present exemplary embodiment is integral with gasket 51 as a result of insert molding. Reinforcing member 70 is housed in recess 53c in a face (lower face in FIG. 1) of base 53 that faces power storage element 30. As illustrated in FIG. 2, reinforcing member 70 is connected to first lead 41 at second connection part 82.

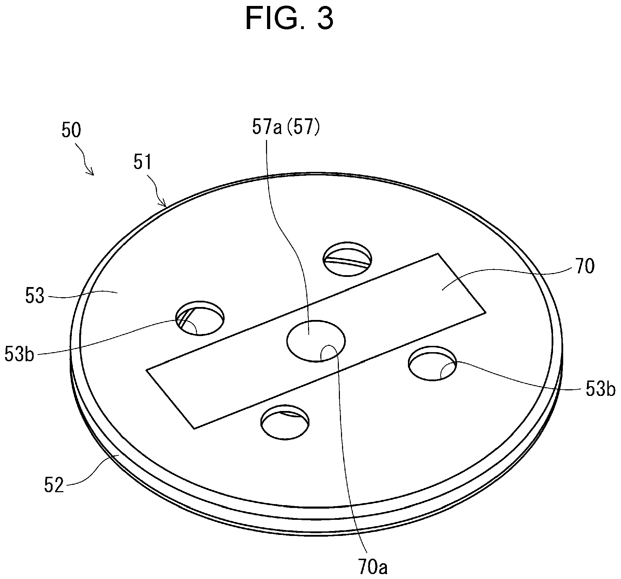

As illustrated in FIG. 3, reinforcing member 70 has the shape of a rectangular plate. As illustrated in FIG. 2, an outer edge (a longitudinal edge) of reinforcing member 70 is located externally to an inner edge of outer peripheral part 58 of sealing plate 56 in a radial direction of case 20. FIGS. 1 and 2 are sections of power storage device 10 that are taken longitudinally of reinforcing member 70.

Protrusion 57a of sealing plate 56 is inserted in first through hole 53a and second through hole 70a. Protrusion 57a may or may not form a clearance in first through hole 53a here. Protrusion 57a may or may not form a clearance in second through hole 70a. As illustrated in FIG. 2, protrusion 57a of sealing plate 56 is connected to first lead 41 at first connection part 81.

As illustrated in FIG. 2, first connection part 81 connecting protrusion 57a and first lead 41 and second connection part 82 connecting reinforcing member 70 and first lead 41 are continuous with each other. First connection part 81 and second connection part 82 have substantially the same thickness (vertical thickness in FIG. 2). Such first and second connection parts 81 and 82 can be formed at a time, for example, by laser welding using constant output power.

As illustrated in FIG. 3, base 53 of gasket 51 includes a plurality of vent holes (through holes) 53b. Vent holes 53b lead to displaceable part 57 for transmitting internal pressure of case 20 to displaceable part 57.

When the internal pressure of case 20 increases, protrusion 57a of displaceable part 57 is displaced in a direction away from power storage element 30 (i.e., in a direction away from first lead 41). On the other hand, displacement of first lead 41 is reduced by reinforcing member 70 and base 53 reinforced by reinforcing member 70. Therefore, protrusion 57a is disconnected from first lead 41 when protrusion 57a is displaced more. As a result, overcharging or another problem is restrained.

When the internal pressure of case 20 increases further, causing even more displacement of displaceable part 57, thin-walled part 59 or a peripheral part of thin-walled part 59 breaks. As a result, gas inside case 20 is discharged out of case 20.

### First Modification of First Exemplary Embodiment

A description is provided of a first modification of the first exemplary embodiment according to the present disclosure. Reinforcing member 70 of power storage device 10 of the present modification has a different shape compared with that of the above-described first exemplary embodiment. The following description is provided mainly of a difference from the above-described first exemplary embodiment.

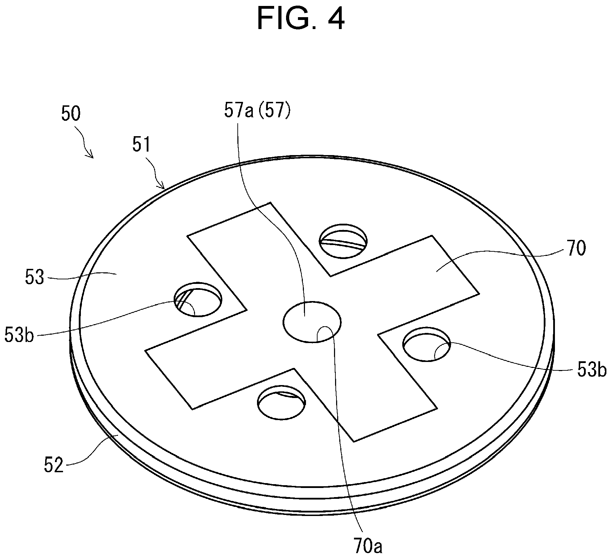

As illustrated in FIG. 4, reinforcing member 70 of the present modification has the shape of a cross-shaped plate. This configuration allows for more effective reinforcement of base 53 of gasket 51.

### Second Modification of First Exemplary Embodiment

A description is provided of a second modification of the first exemplary embodiment according to the present disclosure. Reinforcing member 70 of power storage device 10 of the present modification has a different shape compared with that of the above-described first exemplary embodiment. The following description is provided mainly of a difference from the above-described first exemplary embodiment.

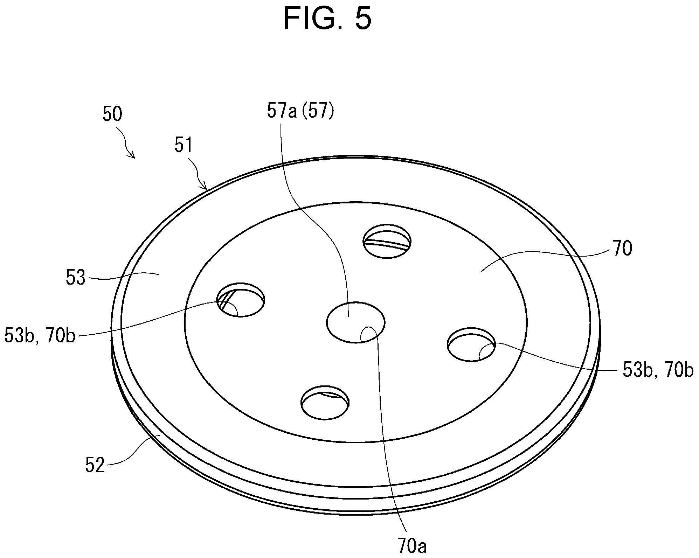

As illustrated in FIG. 5, reinforcing member 70 of the present modification is disk-shaped. Reinforcing member 70 includes third through holes 70b that are circular at positions overlapping with vent holes 53b. Third through hole 70b is not limited to the circular shape. This configuration allows for more effective reinforcement of base 53 of gasket 51. Third through hole 70b is an example of the through hole.

### Third Modification of First Exemplary Embodiment

A description is provided of a third modification of the first exemplary embodiment according to the present disclosure. First connection part 81 and second connection part 82 of power storage device 10 of the present modification are configured differently from those of the above-described first exemplary embodiment. The following description is provided mainly of a difference from the above-described first exemplary embodiment.

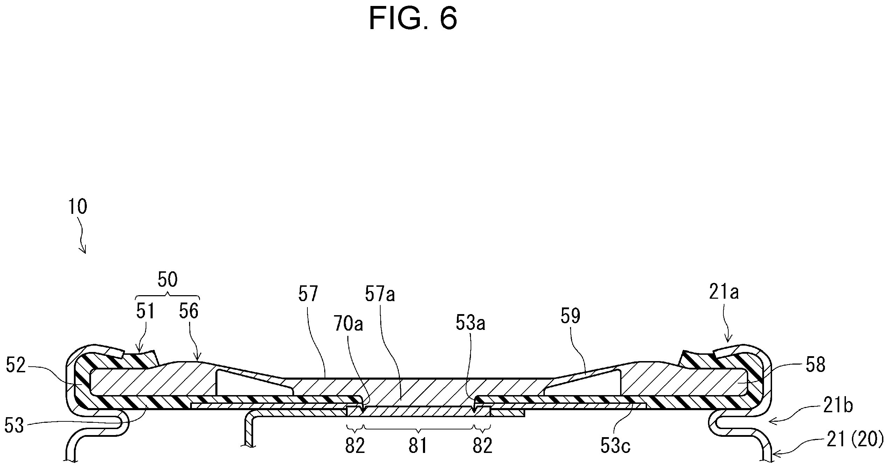

As illustrated in FIG. 6, first connection part 81 connecting protrusion 57a and first lead 41 and second connection part 82 connecting reinforcing member 70 and first lead 41 are continuous with each other as in the above-described first exemplary embodiment; however, a connection part corresponding to an area between first and second connection parts 81 and 82 has a reduced thickness. Power storage device 10 having such first and second connection parts 81 and 82 can be manufactured by a power storage device manufacturing method that includes a welding step of forming first and second connection parts 81 and 82 by laser welding. In the welding step, laser output power for the area between first connection part 81 and second connection part 82 is made weaker than for first connection part 81 and for second connection part 82.

### SECOND EXEMPLARY EMBODIMENT

A description is provided of a second exemplary embodiment according to the present disclosure. First connection part 81 and second connection part 82 of power storage device 10 according to the present exemplary embodiment are configured differently from those of the above-described first exemplary embodiment. The following description is provided mainly of a difference from the above-described first exemplary embodiment.

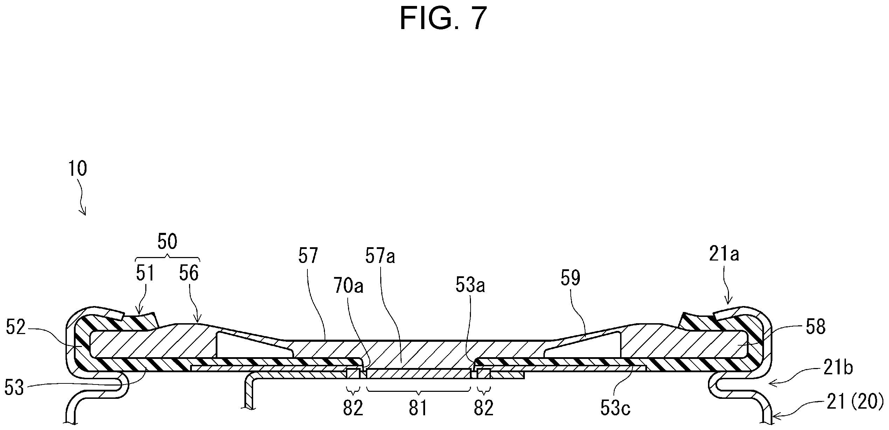

As illustrated in FIG. 7, first connection part 81 connecting protrusion 57a and first lead 41 and second connection part 82 connecting reinforcing member 70 and first lead 41 are separate from each other. Power storage device 10 having such first and second connection parts 81 and 82 can be manufactured by a power storage device manufacturing method that includes a welding step of forming first and second connection parts 81 and 82 by laser welding. In the welding step, an area between first connection part 81 and second connection part 82 does not undergo laser irradiation.

### INDUSTRIAL APPLICABILITY

The present disclosure is applicable to power storage devices and methods of manufacturing power storage devices.

### REFERENCE MARKS IN THE DRAWINGS

10: power storage device
20: case
21: tubular part
21 a: open end part
21b: grooved part
22: bottom part
30: power storage element
41: first lead (lead)
42: second lead
50: sealing member
51: gasket
52: compression part
53: base
53a: first through hole
53b: vent hole (through hole)
53c: recess
56: sealing plate
57: displaceable part
57a: protrusion
58: outer peripheral part
59: thin-walled part
61: first insulating plate
62: second insulating plate
70: reinforcing member
70a: second through hole
70b: third through hole (through hole)
81: first connection part
82: second connection part

## Claims

1. A power storage device comprising:
a case including a tubular part and a bottom part, the tubular part being cylindrical and including an open end part at one end, the bottom part closing an opposite end of the tubular part;
a power storage element disposed inside the case, the power storage element including a pair of electrodes;
a lead connected to one of the pair of electrodes; and
a sealing member sealing the open end part of the case, wherein
the sealing member includes a gasket including an insulation property and a sealing plate including conductivity,
the gasket includes a compression part between the tubular part and the sealing plate, and a base that is disk-shaped and is layered with the sealing plate,
the sealing plate includes a displaceable part and an outer peripheral part surrounding the displaceable part, the displaceable part including a protrusion projecting toward the power storage element, the outer peripheral part being pinched by the compression part,
the base is disposed between the sealing plate and the power storage element,
the power storage device further comprises a reinforcing member between the base and the lead, the reinforcing member reinforcing the base,
the base includes a first through hole,
the reinforcing member includes a second through hole at a position overlapping with the first through hole,
the protrusion of the sealing plate is inserted in the first through hole and the second through hole,
the protrusion of the sealing plate is connected to the lead, and
the protrusion is disconnected from the lead when displaced in a direction away from the lead in response to an increase in internal pressure of the case.

2. The power storage device according to claim 1, wherein
the reinforcing member is a conductive member, and
the reinforcing member and the lead are electrically and mechanically connected.

3. The power storage device according to claim 2, wherein a first connection part connects the protrusion and the lead, aa second connection part connects the reinforcing member and the lead, and the first connection part and the second connection part are continuous with each other.

4. The power storage device according to claim 2, wherein a first connection part connects the protrusion and the lead, and a second connection part the reinforcing member and the lead, and the first connection part and the second connection part are separate from each other.

5. The power storage device according to any one of claims 1 to 4, wherein
the sealing plate includes a thin-walled part between the protrusion part and the outer peripheral part, and
an outer edge of the reinforcing member is located externally to an inner edge of the outer peripheral part of the sealing plate in a radial direction of the case.

6. The power storage device according to any one of claims 1 to 5, wherein
the base of the gasket includes a recess in a face facing the power storage element, and
the reinforcing member is at least partly housed in the recess.

7. The power storage device according to any one of claims 1 to 6, wherein the base of the gasket and the reinforcing member respectively include through holes that overlap each other.

8. A method for manufacturing the power storage device according to claim 3 or 4, the method comprising a welding step of forming the first connection part and the second connection part by laser welding, wherein
in the welding step, laser output power for an area between the first connection part and the second connection part is made weaker than for the first connection part and for the second connection part, or an area between the first connection part and the second connection part is excluded from laser irradiation.
